# EUROPÄISCHE PATENTSCHRIFT

(11) **EP 0 664 408 B1**
(45) Veröffentlichungstag und Bekanntmachung des Hinweises auf die Patenterteilung: **10.03.1999**
(21) Anmeldenummer: 94120373.9
(22) Anmeldetag: 22.12.1994
(51) Int. Cl.: F16C 11/06

(54) **Kugelgelenk**
Ball-joint
Joint à rotule

(30) Priorität: 21.01.1994 DE 4401639
(43) Veröffentlichungstag der Anmeldung: 26.07.1995
(73) Patentinhaber: DAIMLER-BENZ AKTIENGESELLSCHAFT, 70567 Stuttgart (DE)
(72) Erfinder: Reichelt, Helmut, Dipl.-Ing., D-73770 Denkendorf (DE)

(56) Entgegenhaltungen:
- EP-A- 0 213 314
- EP-A- 0 345 452
- FR-A- 2 250 042
- GB-A- 861 976
- GB-A- 2 038 928
- US-A- 2 917 334
- US-A- 3 545 797

## Beschreibung

Die Erfindung betrifft ein Traggelenk der im Oberbegriff von Anspruch 1 näher definierten Art.

Traggelenke dieser Art sind aus der Praxis bekannt. Sie werden beispielsweise in Doppelquerlenkerachsen mit federbelasteten unteren Querlenkern eingebaut. Dabei treten aufgrund der Radaufstandskraft senkrecht zur Fahrbahnoberfläche angreifende Kräfte auf, welche das Traggelenk beispielsweise auf Zug belasten.

Da diese Belastung, d.h. die angreifenden Zugkräfte, nicht immer gleich groß ist, sind im Inneren des Traggelenkes Einrichtungen für einen Ausgleich des dort vorhandenen Spieles vorzusehen. Als spielausgleichendes Teil wird meist ein Bauteil aus einem verformungsfähigen Werkstoff, meist einem Kunststoff, verwendet. Dieses Bauteil, das meist als Druckschale ausgeführt ist, liegt einerseits am Deckel des Traggelenkes an, gegen den es von der Kugel des Traggelenkes gepreßt wird, andererseits liegt die Druckschale auch an der Gehäusewand des Traggelenkes an. Aufgrund dieses Anliegens an zwei Punkten, also räumlich gesehen an zwei Ringflächen, kann sich die Druckschale zum Spielausgleich nur sehr wenig oder gar nicht verformen, so daß entweder der Spielausgleich unzureichend ist, oder das Traggelenk nur sehr schwer bewegbar ist, weil die Druckschale so dimensioniert ist, daß sehr hohe Reibmomente zwischen der Druckschale und der Kugel des Traggelenkes entstehen.

Hinzu kommt noch, daß sich das spielausgleichende Bauteil, nämlich die Druckschale, an die Form des Deckels des Gehäuses anpaßt. Insbesondere am äußeren Umfang der Druckschale findet dieser Vorgang statt, so daß beim Einrollieren des Traggelenkgehäuses die Druckschale auf großem Radius auf die Kugel drückt. Das Reibmoment des Gelenkes bzw. die Reibmomenttoleranz wird hierdurch negativ beeinflußt.

Wenn der Deckel nach innen gedrückt wird, entsteht zusätzlich eine Keilwirkung im Bereich zwischen der Druckschale und der Kugel. Zudem kann bei Druckbelastung noch immer eine axiale Weichheit bzw. Elastizität zwischen der Kugel und dem Gehäuse bzw. der Abstützung auftreten, weil im inneren Bereich bei kleinerem Radius zwischen dem Deckel und der Druckschale ein Freiraum vorhanden ist.

Eine axiale Weichheit im Gelenk ist jedoch unzulässig, weil Beschädigungen des Traggelenkes anhand einer Spielfreiheit überprüft werden müssen.

Des weiteren sollten keine großen Reibmomentschwankungen im Traggelenk auftreten, damit das Traggelenk mit möglichst definierter Reibung bewegbar ist.

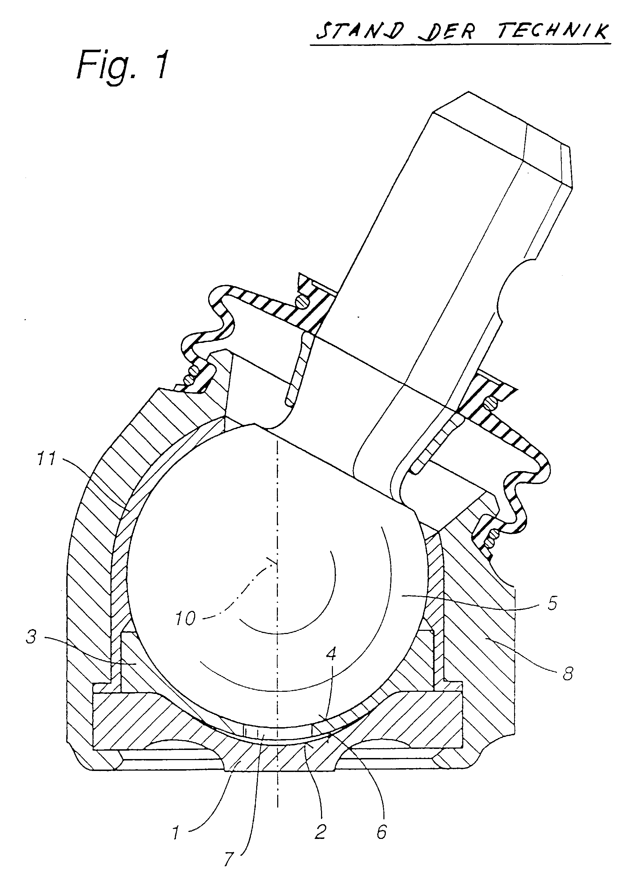

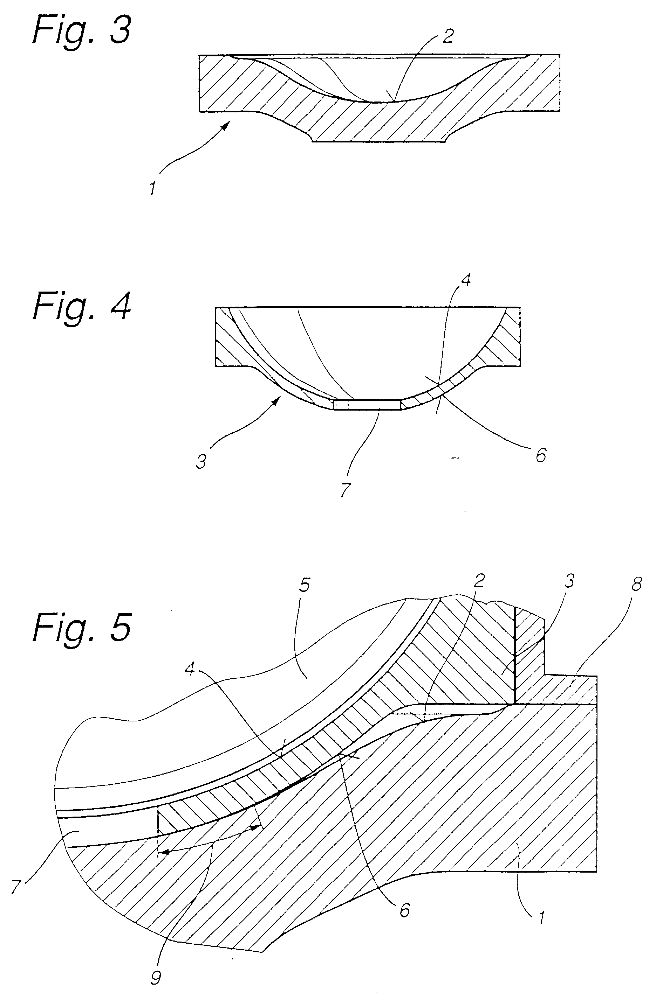

In der US-PS 3 401 962 ist ein Gelenk mit einem verdrehbaren teilkugelförmigen Lagerzapfen dargestellt. Auf dem Lagerzapfen liegt ein Zwischenblech auf, das zusammen mit dem Lagerzapfen gegen ein Lagerteil verdreht werden kann (Fig. 4) oder gegen ein Lagerteil direkt (Fig. 1). Das Lagerteil stellt somit ein stehendes Teil gegenüber dem drehbaren Lagerzapfen und gegebenenfalls auch dem Zwischenblech dar. Um einen direkten Kontakt zwischen dem Lagerteil und dem Lagerzapfen oder dem Zwischenblech zu vermeiden und um eine Berührung nur über O-Ringe zu erzielen, ist der Radius der Lagerschale größer als der Radius des Lagerzapfens. Der entstehende Radius dient als berührungsfreier Schmiermittelraum.

Für Traggelenke der angesprochenen Art ist es aus der US-A-3545797 bekannt, die die Kugel gegenüberliegend zum Zapfen gegen den Deckel abstützende elastische Druckschale im bezogen auf die Mittellinie des Kugelzapfens zentralen Bereich verstärkt auszuführen, entsprechend den in diesem Bereich besonders hohen Beanspruchungen. Führen diese Beanspruchungen zu einem Verschleiß des verstärkten Bereiches, so verlagern sich die Stützkräfte radial nach außen mit der Folge eines entsprechend vergrößerten Reibradius, so daß verschleißbedingt auch Veränderungen im Reibmoment, und zwar in Richtung zunehmender Schwergängigkeit des Gelenkes unter Belastung eintreten.

Bei einer weiteren bekannten Traggelenkslösung gemäß der US-A-2917334 ist die Druckschale im zentralen, um die Mittellinie des Gelenkzapfens liegenden Radialbereich verstärkt ausgeführt, mit der Zielsetzung, lediglich diesen Bereich als Tragbereich einzusetzen, was dadurch erreicht werden soll, daß ein daran anschließender, radial weiter außen liegender Bereich der Druckschale mit entsprechend geringerer Dicke ausgeführt wird. Hierdurch soll eine bei größerer Berührfläche zwischen Druckschale und abstützendem Deckelteil des Gelenkes höhere Haftreibung vermieden und ein gut ansprechendes Gelenk realisiert werden.

Der vorliegenden Erfindung liegt die Aufgabe zugrunde, ein Traggelenk der eingangs erwähnten Art vorzusehen, das eine möglichst große Toleranzunempfindlichkeit ohne Einstellnotwendigkeit aufweist.

Erfindungsgemäß wird diese Aufgabe durch die im kennzeichnenden Teil von Anspruch 1 genannten Merkmale gelöst.

Durch die erfindungsgemäße Wahl der Krümmungsradien von Deckel und Druckschale, welche dazu führt, daß im unmontierten Zustand die Dicke der Druckschale größer ist als der Abstand zwischen Kugel und Abstützfläche des Deckels in montiertem Zustand, wird bei der Montage durch eine Pressung der Druckschäle auf einfache Art und Weise sichergestellt, daß das Gelenk spielfrei ist und die Reibmomente des Gelenkes bzw. die Reibmomenttoleranzen nicht durch größere Veränderung des mittleren Reibradius negativ beeinflußt werden, so daß das Traggelenk eine möglichst definierte Reibung aufweist und beibehält. Das bei der Pressung verdrängte Material der Druckschale kann dabei in die zentrale Ausnehmung ausweichen.

Vorteilhafte Ausgestaltungen und Weiterbildungen der Erfindung ergeben sich aus den Unteransprüchen und dem nachfolgend anhand der Zeichnung beschriebenen Ausführungsbeispiel.

Es zeigt:
- Fig. 1: einen Schnitt durch ein Traggelenk nach dem Stand der Technik;
- Fig. 2: einen Schnitt durch ein erfindungsgemäßes Traggelenk;
- Fig. 3: einen Schnitt durch den Deckel eines erfindungsgemäßen Traggelenkes;
- Fig. 4: einen Schnitt durch die Druckschale eines erfindungsgemäßen Traggelenkes; und
- Fig. 5: in vergrößerter Darstellung die Einzelheit "V" der Fig. 1.

In der Fig. 1 ist zur Verdeutlichung der Erfindung ein Traggelenk nach dem Stand der Technik prinzipmäßig im Schnitt dargestellt. Ein Deckel 1 weist auf seiner dem Inneren des Traggelenkes zugewandten Seite eine kalottenförmige Innenwand 2 mit einer Abstützfläche auf. Eine Druckschale 3 mit einer Kalottenform 4 liegt zwischen dem Deckel 1 und einer Kugel 5 eines Kugelzapfens. Auf ihrer Außenseite bzw. auf der zu dem Deckel 1 gerichteten Seite der Druckschale 3 weist diese eine sphärisch bzw. gekrümmte Fläche 6 auf, an der die kalottenförmige Innenwand 2 des Deckels nach der Montage des Traggelenkes teilweise anliegt, und damit eine Abstützfläche für die Druckschale 3 ergibt. Die Druckschale 3 weist eine zentrale Bohrung bzw. Ausnehmung 7 auf.

Die Abstützung des Kugelzapfens mit der Kugel 5 in einem diesen umgebenden Gehäuse 8 erfolgt zum einen über eine schalenförmige Aufnahme 11 und zum anderen über eine Abstützfläche der Druckschale 3, deren Krümmung auf der der Kugel 5 zugewandten Seite der Krümmung bzw. dem Radius der Kugel angepaßt ist. Die Mittellinie des Traggelenkes ist mit "10" bezeichnet.

Bei dieser Ausgestaltung des Standes der Technik sind die Radien der Kugel 5, der Druckschale 3 und des Deckels 1 korrespondierend zueinander bzw. koaxial und die Dicke der Druckschale 3 entspricht praktisch dem Abstand zwischen der Innenwand 2 des Deckels 1 und der Kugeloberfläche. Dies bedeutet, daß mit zunehmender Last der Abstützbereich in eine radial äußere, dem Deckelrand nahe Ringzone wandert, mit der Folge eines entsprechend großen Reibradius und eines daraus resultierenden großen Reibmomentes. Wie aus der Fig. 1 ersichtlich ist, kann dabei sogar die Situation entstehen, daß im radialen inneren Bereich ein Freiraum zwischen dem Außendurchmesser der Druckschale, d.h. der Fläche 6, und der Innenwand 2 des Deckels 1 entsteht. Das Reibmoment ist damit toleranzabhängig.

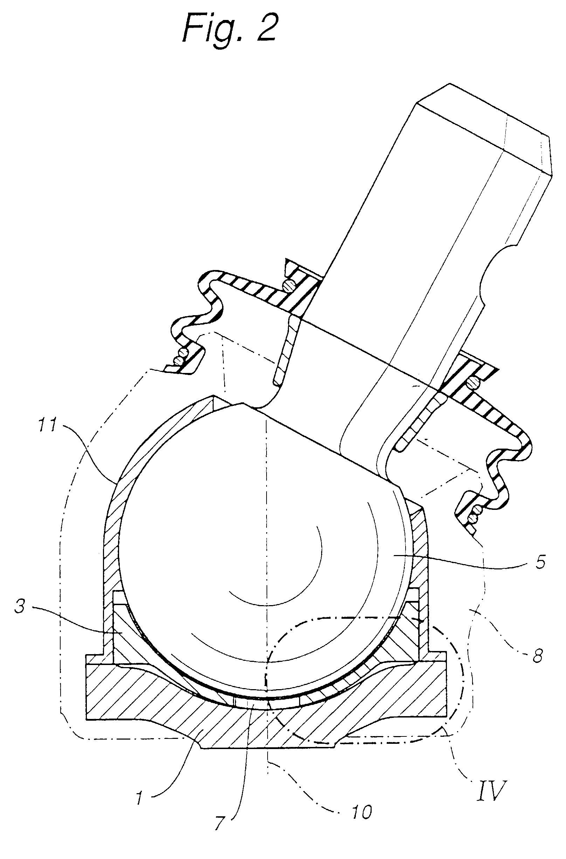

In den Fig. 2 bis 4 und insbesondere in der vergrößerten Darstellung der Fig. 3 ist nun die erfindungsgemäße Lösung dargestellt. Die Druckschale 3 ist aus einem verformbaren Kunststoff hergestellt, so daß sie sich unter Belastung verformen und keine Beschädigung in Folge zu hoher Spannungen im Werkstoff auftreten kann. Die Druckschale 3 weist im unmontierten Zustand zumindest in dem vorgesehenen Überdeckungs- bzw. Abstützbereich zwischen Druckschale 3 und Deckel 1 eine größere Dicke auf als der Abstand zwischen der Kugel 5 und der Innenwand des Deckels 1 im montierten Zustand des Traggelenkes.

Mit Überdeckungs- bzw. Abstützbereich ist dabei der Bereich gemeint, in dem die Druckschale 3 mit ihrer gekrümmten Fläche 6 an der Innenwand 2 des Deckels 1 anliegt. Dieser Abstützbereich ist in der Fig. 5 mit "9" angegeben und liegt im radial inneren Bereich, bezogen auf die Mittellinie 10.

Der Krümmungsradius des Deckels 1 ist wenigstens in dem vorgesehenen Abstützbereich 9 größer als der Außenradius der Druckschale 3, d.h. die Innenwand des Deckels 1 ist flacher gekrümmt.

Dies bedeutet, bei der Montage des Traggelenkes erfolgt eine Pressung der Druckschale 3 im inneren Bereich, wobei sich das Material im wesentlichen in die zentrale Ausnehmung 7 verteilt. Auf diese Weise entsteht der Abstützbereich 9 im radial inneren Bereich in Form einer keilförmigen Zone, wobei der Keil radial nach außen zu abnimmt. In der Fig. 5 ist die Länge des Abstützbereiches 9 mit Pfeilen gekennzeichnet. Wie ersichtlich wird damit auf einfache Weise ein Toleranzausgleich erzielt. Weist die Kugel 5 ihren vorgesehenen Durchmesser auf, ist die keilförmige Zone des Abstützbereiches 9 sehr klein. Bei einer größeren Kugel 5 ist der Abstützbereich zwangsweise etwas größer, er verbleibt jedoch im Bereich eines kleinen Reibradiuses, wobei damit der Abstand der keilförmigen Zone von der Mittellinie 10 des Traggelenkes gemeint ist. Grundsätzlich verbleibt der Reibradius jedoch relativ klein und liegt nicht wie beim Stand der Technik gemäß Fig. 1 bei hoher Belastung im radialen äußeren Bereich.

Bei der Ausgestaltung nach den Fig. 2 bis 5 werden somit höhere Belastungen stets im zentralen Bereich abgefangen. Damit bleibt der Reibradius auch belastungsabhängig und unabhängig von Toleranzen im wesentlichen gleich und damit auch das Reibmoment. Die Belastung entspricht einer entsprechenden Vorspannung aufgrund von Maßtoleranzen.

Durch die zentrale Ausnehmung 7 wird - wie vorstehend bereits erwähnt - erreicht, daß ein Auswandern von Material der gepreßten Druckschale 3 in diesen Bereich möglich ist. Dies bedeutet, mit anderen Worten, es wird verhindert, daß die Druckschale 3 nach radial außen ausweichen muß, was zu einer entsprechenden Vergrößerung des Reibradius und damit zu einer entsprechenden Schwankung im Reibmoment führen würde. Zwar werden auftretende Kräfte immer weiter nach außen verteilt, allerdings sinkt auch der Betrag der angreifenden Kraft nach außen hin, da die Kraft immer kleiner wird, je geringer die Überdeckung bzw. der Abstützbereich 9 bei abnehmender keilförmiger Zone ist. Daher ergeben sich keine größeren Auswirkungen auf die Reibmomenttoleranz bei größeren überdeckungs- bzw. Toleranz fehlern.

Die Bildung des keilförmigen Abstützbereiches im inneren Bereich kann durch unterschiedliche Radien zwischen der Druckschale und dem Deckel erreicht werden, wie in den Fig. 2 bis 5 dargestellt: Der Radius der Innenwand des Deckels ist größer bzw. flacher. Auf diese Weise wird bei einem herkömmlichen Gelenk mit einer Kugel eine normale Druckschale verwendet und der Deckel 1 entsprechend abgeändert bezüglich eines entsprechend flacheren Verlaufes seiner Innenwandung. Mit anderen Worten, der Mittelpunkt des Radius des Deckels ist versetzt zum Kugelmittelpunkt. Nur die beiden Radien der Druckschale 3 haben den gleichen Mittelpunkt wie die Kugel 5.

Die Montage des erfindungsgemäßen Traggelenkes erfolgt dergestalt, daß zuerst die Lagerschale bzw. Abstützung 11 in das Gehäuse 8 eingelegt wird, wonach dann die Kugel 5 eingelegt wird. Anschließend wird die Druckschale 3 an die Kugel 5 gelegt und der Deckel 1 an dem Gehäuse 8 angelegt, wobei dann nach einem Anpreßvorgang der Außenradius der Druckschale 3 dem Radius bzw. der Krümmung der Innenwand 2 des Deckels 1 im Abstützbereich 9 entspricht.

Die Befestigung des Deckels 1 an dem Gehäuse 8 erfolgt durch Umbördeln eines überstehenden Randes des Gehäuses 8, so daß keine weiteren Befestigungs- und Einstelleinrichtungen notwendig sind, um das erfindungsgemäße Traggelenk zu montieren.

## Patentansprüche

1. Traggelenk mit einem Gehäuse (8) und einem über eine Abstützung in diesem gehaltenen Kugelzapfen, wobei die Abstützung zapfenseitig eine schalenförmige Aufnahme (11), gegenüberliegend zum Zapfen eine Druckschale (3) mit einer Ausnehmung (7) in ihrem zentralen Abstützbereich und rückseitig zur Druckschale (3) einen diese abstützenden Deckel (1) aufweist, dessen gekrümmte Abstützfläche zur Oberfläche der Kugel etwa konzentrisch ist,
**dadurch gekennzeichnet**, daß
in unmontiertem Zustand des Traggelenkes die Krümmung des Deckels (1) wenigstens im Abstützbereich (9) einen größeren Radius aufweist als ein Außenradius der Druckschale (3), welcher der Krümmung des Deckels (1) benachbart liegt, und daß in montiertem Zustand des Traggelenkes wenigstens im Abstützbereich (9) durch Verpressung der Druckschale (3) die Radien gleich groß sind.

2. Traggelenk nach Anspruch 1,
**dadurch gekennzeichnet,** daß
nach radial außen, bezogen auf die Mittellinie (10), die Größe des Abstandes zwischen der Kugel (5) und der Abstützfläche des Deckels (1) die Dicke der Druckschale (3) überschreitet.

3. Traggelenk nach Anspruch 1 oder 2,
**dadurch gekennzeichnet,**
daß die Radien der Druckschale (3) und der Kugel (5) den gleichen Mittelpunkt aufweisen und daß der Mittelpunkt des Radius des Deckels (1) zum Mittelpunkt der Kugel (5) versetzt ist.

## Claims

1. Supporting joint having a casing (8) and a ball pin held in the latter by means of a support, said support comprising on the pin side a shell-shaped receptacle (11), oppositely to the pin a pressure shell (3) having a cutout (7) in its central support region, and on the rear side relative to the pressure shell (3) a cover (1) which supports said pressure shell and whose curved support surface is approximately concentric to the surface of the ball, characterized in that, when the supporting joint is in the uninstalled state, the curvature of the cover (1), at least in the support region (9), has a radius greater than an outside radius of the pressure shell (3) lying next to the curvature of the cover (1), and in that, when the supporting joint is in the installed state, the radii, at least in the support region (9), are equal in magnitude because of the pressing of the pressure shell (3).

2. Supporting joint according to Claim 1, characterized in that radially outwards, relative to the centre line (10), the magnitude of the distance between the ball (5) and the support surface of the cover (1) exceeds the thickness of the pressure shell (3).

3. Supporting joint according to Claim 1 or 2, characterized in that the radii of the pressure shell (3) and of the ball (5) have the same centre point, and in that the centre point of the radius of the cover (1) is offset with respect to the centre point of the ball (5).

## Revendications

1. Joint porteur comprenant un corps (8) et un pivot à rotule maintenu dans ce corps par l'intermédiaire d'un appui, lequel appui comporte, du côté du pivot, une pièce en forme de coquille constituant un logement (11), à l'opposé du pivot, une cuvette de pression (3) présentant un évidement (7) dans sa région centrale d'appui et, sur le côté arrière de la cuvette de pression (3), un couvercle (1) qui sert d'appui à cette cuvette et dont la surface d'appui courbe est à peu près concentrique à la surface de la rotule, caractérisé en ce que, à l'état non assemblé du joint porteur, la courbure du couvercle (1) présente, tout au moins dans la région d'appui (9), un rayon plus grand qu'un rayon extérieur de la cuvette de pression (3), lequel est voisin de la courbure du couvercle (1), et que, à l'état assemblé du joint porteur, par suite d'une compression de la cuvette de pression (3), les rayons sont d'égale grandeur, tout au moins dans la région d'appui (9).

2. Joint porteur selon la revendication 1, caractérisé en ce que, radialement vers l'extérieur, par rapport à l'axe (10), la distance entre la rotule (5) et la surface d'appui du couvercle (1) dépasse l'épaisseur de la cuvette de pression (3).

3. Joint porteur selon la revendication 1 ou 2, caractérisé en ce que les rayons de la cuvette de pression (3) et de la rotule (5) ont le même centre et que le centre du rayon du couvercle (1) est décalé par rapport au centre de la rotule (5).
